# EUROPÄISCHE PATENTSCHRIFT

(11) **EP 3 549 663 B1**
(45) Veröffentlichungstag und Bekanntmachung des Hinweises auf die Patenterteilung: **04.11.2020**
(21) Anmeldenummer: 19166026.5
(22) Anmeldetag: 29.03.2019
(51) Int. Cl.: B01F 5/06, F16L 23/04, F01N 3/28

(54) **ABGASANLAGE UND MISCHERBAUGRUPPE FÜR EINE ABGASANLAGE**
WASTE GAS SYSTEM AND MIXING ASSEMBLY FOR A WASTE GAS SYSTEM
INSTALLATION DE GAZ D'ÉCHAPPEMENT ET MODULE MÉLANGEUR POUR UNE INSTALLATION DE GAZ D'ÉCHAPPEMENT

(30) Priorität: 03.04.2018 DE 102018107766
(43) Veröffentlichungstag der Anmeldung: 09.10.2019
(73) Patentinhaber: Eberspächer Exhaust Technology GmbH & Co. KG, 66539 Neunkirchen (DE)
(72) Erfinder: Röhr, Benjamin, 73732 Esslingen (DE); Schwarz, Roland, 73732 Esslingen (DE); Gorke, Peter, 70327 Stuttgart (DE); Berkemer, Frank, 72800 Eningen u.A. (DE); Juroszek, Tadeusz-Jozef, 73669 Lichtenwald (DE)
(74) Vertreter: Ruttensperger Lachnit Trossin Gomoll

(56) Entgegenhaltungen:
- EP-A1- 2 474 721
- DE-A1-102014 215 083
- DE-U1-202012 011 764

## Beschreibung

Die vorliegende Erfindung betrifft eine Abgasanlage sowie eine Mischerbaugruppe, die in einer derartigen Abgasanlage einer Fahrzeugbrennkraftmaschine dazu eingesetzt werden kann, um in das aus einer Brennkraftmaschine ausgestoßene Abgas eingespritztes Reaktionsmittel mit dem Abgas zu vermischen.

Zur Verringerung des Schadstoffausstoßes insbesondere von DieselBrennkraftmaschinen in Kraftfahrzeugen ist es bekannt, Reaktionsmittel, wie zum Beispiel eine Harnstoff/Wasser-Lösung, in das von der Brennkraftmaschine ausgestoßene Abgas einzuspritzen, um in einer in die Abgasanlage integrierten Katalysatoranordnung eine selektive katalytische Reduktion zur Verringerung des Stickoxidgehalts im Abgas durchzuführen. Um dabei eine effiziente Durchmischung des Abgases mit dem in diese eingespritzten Reaktionsmittel zu erlangen, wird in die Abgasanlage stromabwärts der Reaktionsmitteleinspritzung und stromaufwärts der Katalysatoranordnung ein Mischer integriert, welcher mit einer Mehrzahl von schaufelartigen Strömungsablenkelementen eine Verwirbelung des in der Abgasanlage strömenden Abgases und somit eine Vermischung mit dem eingespritzten Reaktionsmittel bewirkt. Derartige Mischer sind im Allgemeinen so aufgebaut, dass sie grundsätzlich im Inneren von rohrartigen Abgasführungselementen der Abgasanlage aufgenommen sind und in ihrem radial äußeren Bereich daran getragen sind.

In Fig. 1 ist eine aus der nachveröffentlichten deutschen Patentanmeldung DE 10 2016 120 171.5 bekannte Abgasanlage für eine Fahrzeugbrennkraftmaschine allgemein mit 10 bezeichnet. Die Abgasanlage 10 weist in einem stromaufwärtigen Bereich 12 zwei aneinander anschließende, rohrartige Abgasführungselemente 14, 16 auf. Diese weisen in einem Angrenzungsbereich 18 jeweils einen flanschartigen Kopplungsabschnitt 20 bzw. 22 auf, in welchem diese beispielsweise durch die flanschartigen Kopplungsabschnitte 20, 22 durchgreifende Schraubbolzen miteinander fest verbunden sind. Zwischen den beiden flanschartigen Kopplungsbereichen 20, 22 ist ein nachfolgend noch detaillierter beschriebenes Trägerelement 24 einer allgemein mit 26 bezeichneten Mischerbaugruppe positioniert und somit vermittels der z.B. auch dieses durchgreifenden Schraubbolzen mit den beiden Abgasführungselementen 14, 16 bzw. deren flanschartigen Kopplungsabschnitten 20, 22 im Angrenzungsbereich 18 an der Abgasanlage 10 festgelegt.

Der Angrenzungsbereich 18 liegt stromabwärts einer Reaktionsmitteleinspritzanordnung, vermittels welcher ein Reaktionsmittel, beispielsweise eine Harnstoff/Wasser-Lösung, in den Abgasstrom eingespritzt werden kann. Stromabwärts des Angrenzungsbereichs 18, angrenzend an das Abgasführungselement 16, ist eine allgemein mit 28 bezeichnete Katalysatoranordnung vorgesehen, in welcher das Gemisch aus Abgas und Reaktionsmittel einer selektiven katalytischen Reduktion unterzogen wird, um somit den Stickoxidanteil im Abgas zu senken. Über ein weiteres Abgasführungselement 30 gelangt das Abgas zu einem Abgasschalldämpfer 32, aus welchem dieses beispielsweise über zwei Endrohre 34, 36 nach außen abgegeben wird.

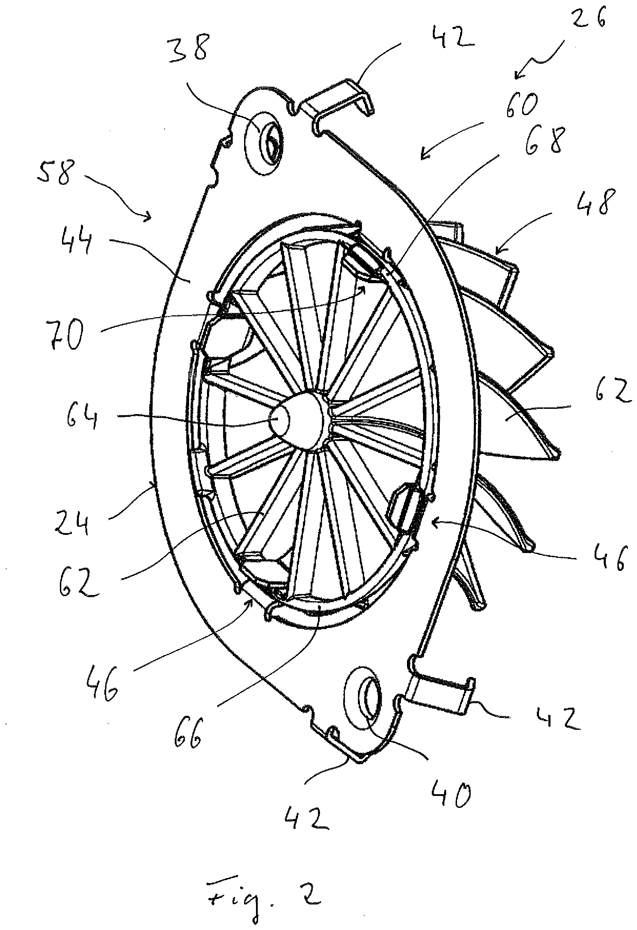

Die Fig. 2 zeigt in perspektivischer Ansicht die Mischerbaugruppe 26. Die Mischerbaugruppe 26 umfasst das bereits angesprochene vorzugsweise plattenartig ausgebildete Trägerelement 24, dessen Umfangskontur beispielsweise im Wesentlichen der Umfangskontur des flanschartigen Kopplungsabschnitts 22 entsprechen kann. Ebenso wie der flanschartige Kopplungsabschnitt 22 ist das vorzugsweise als Blechumformteil bereitgestellte und plattenartig ausgebildete Trägerelement 24 mit ringartiger Struktur ausgebildet und weist an zwei einander gegenüberliegenden Umfangsbereichen radiale Erweiterungen mit Öffnungen 38, 40 auf, durch welche hindurch die die beiden flanschartigen Kopplungsabschnitte 20, 22 und somit die Abgasführungselemente 14, 16 verbindenden Schraubbolzen geführt werden können.

Um das Trägerelement 24 bzw. die Mischerbaugruppe 26 als Vormontagebaugruppe mit dem Abgasführungselement 16 zusammenfassen zu können, weist das Trägerelement 24 beispielsweise in den beiden vorangehend angesprochenen Umfangsbereichen Fixierlaschen 42 auf, die so gebogen sind bzw. nach dem Positionieren der Mischeranordnung 26 am Abgasführungselement 16 gebogen werden, dass sie den flanschartigen Kopplungsabschnitt 22 hintergreifen und somit die Mischerbaugruppe 26 an diesem fixieren. Die so zusammengesetzte Baugruppe kann dann in einfacher Weise mit dem Abgasführungselement 14 zusammengesetzt werden, indem dessen flanschartiger Kopplungsabschnitt an den flanschartigen Kopplungsabschnitt 22 bzw. das Trägerelement 24 angesetzt und durch Verschraubung damit verbunden wird.

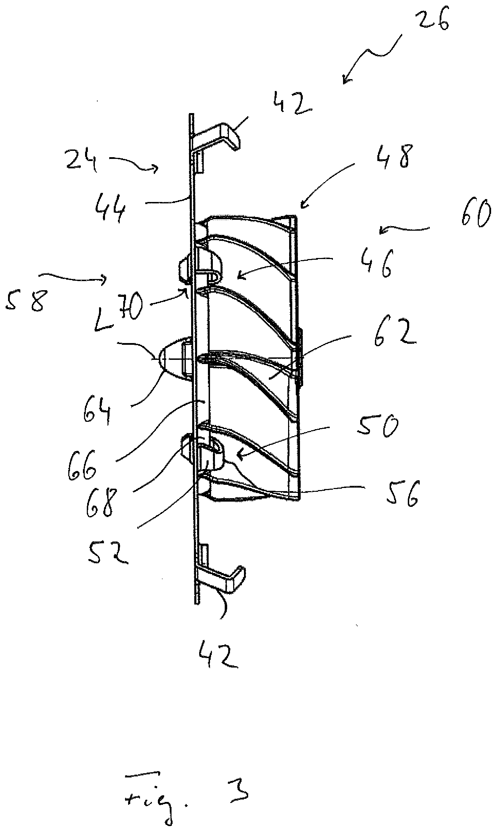

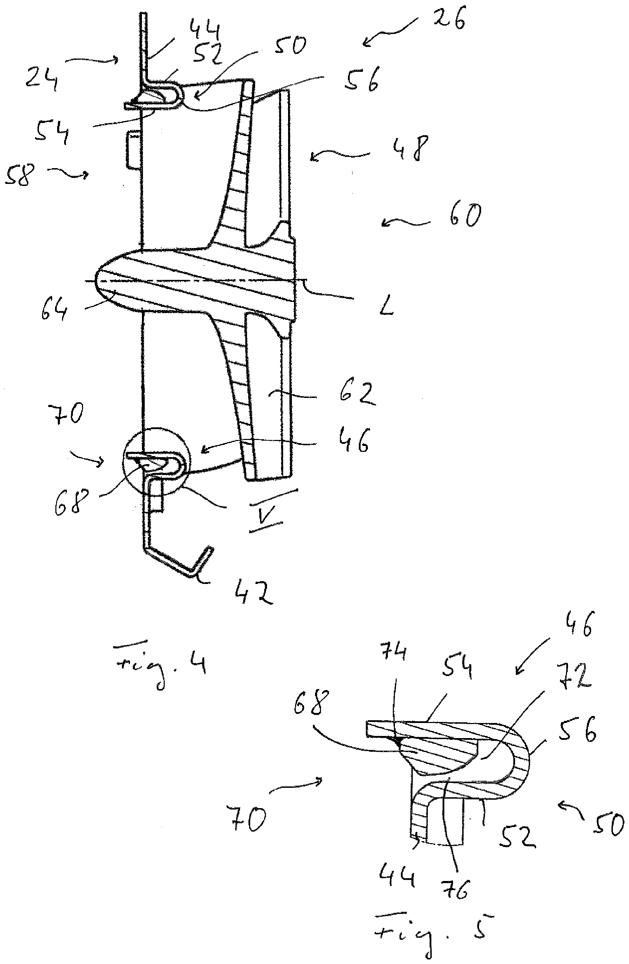

An einem Innenumfangsbereich eines allgemein mit 44 bezeichneten Trägerelementenkörpers des Trägerelements 24, von welchem Trägerelementenkörper 44 sich auch die Fixierlaschen 42 erstrecken, sind in vorzugsweise gleichmäßigem Umfangsabstand zueinander im dargestellten Ausgestaltungsbeispiel vier Gegen-Haltebereiche 46 vorgesehen, an welchen ein allgemein mit 48 bezeichneter Mischerkörper der Mischerbaugruppe 26 festgehalten ist. Jeder der Gegen-Haltebereiche 46 umfasst einen in Fig. 5 deutlich erkennbaren, nach innen vorstehenden laschenartigen Halteabschnitt 50. Jeder laschenartige Halteabschnitt 50 ist im Wesentlichen mit U-förmiger Gestalt ausgebildet und weist einen äußeren U-Schenkel 52, einen inneren U-Schenkel 54 sowie einen diese verbindenden Verbindungsbereich 56 auf. Die U-förmigen Halteabschnitte 50 sind so geformt, dass die Halteabschnitte 50 in Richtung zu einer in Fig. 3 erkennbaren Anströmseite 58 des Mischerkörpers 48, also in Richtung stromaufwärts, offen sind und zu einer in Fig. 2 verdeckten Abströmseite 60 des Mischerkörpers 48, also in Richtung stromabwärts, insbesondere durch den Verbindungsbereich 56 abgeschlossen sind. Jeder der Halteabschnitte 50 ist im Wesentlichen hakenartig gestaltet und ermöglicht somit eine stabile Halterung des Mischerkörpers 48 am Trägerelement 24. Dabei erstreckt sich der U-Schenkel 52 ausgehend vom Trägerelementenkörper 44 im Wesentlichen in Richtung einer Mischerlängsachse L und in Richtung auf die Abströmseite 60 des Mischerkörpers 48 zu, während der U-Schenkel 54 sich ausgehend vom Verbindungsbereich 56 im Wesentlichen parallel zum U-Schenkel 52 in Richtung auf die Anströmseite 58 des Mischerkörpers 48 zu erstreckt.

Der Mischerkörper 48 umfasst eine Mehrzahl von in Umfangsrichtung aufeinanderfolgenden und bezüglich der Mischerlängsachse L beispielsweise im Wesentlichen radial sich erstreckenden schaufelartigen Strömungsablenkelementen 62. Diese gehen von einem zentralen Körperbereich 64 des Mischerkörpers 48 aus und erstrecken sich nach radial außen bis zu einem vorzugsweise an der Anströmseite 58 an die Strömungsablenkelemente 62 anschließenden ringartigen Verbindungsbereich 66. Der Mischerkörper 48 kann mit dem zentralen Körperbereich 64, den schaufelartigen Strömungsablenkelementen 62 und dem ringartigen Verbindungsbereich 66 als ein integrales Bauteil, beispielsweise als Metallgussbauteil, bereitgestellt sein.

Der ringartige Verbindungsbereich 66 stellt in seinen zwischen den in Umfangsrichtungen unmittelbar aufeinanderfolgenden Strömungsablenkelementen 62 sich erstreckenden und diese miteinander verbindenden Bereichen jeweilige in Form eines Haltestegs 68 ausgebildete Haltebereiche 70 zur Zusammenwirkung jeweils mit einem Gegen-Haltebereich 46 des Trägerelements 24 bereit. Diese als Haltestege 68 ausgebildeten Haltebereiche 70 können, wie in Fig. 5 dargestellt, in einen durch die U-förmigen Halteabschnitte 50 der Gegen-Haltebereiche 46 bereitgestellten Haltebereich-Aufnahmeraum 72 eingeführt werden, so dass die Halteabschnitte 50 einerseits die mit diesen zusammenwirkenden Haltebereiche 70 bezüglich der Mischerlängsachse L von radial außen nach radial innen übergreifen und die Haltebereiche 70 mit den inneren U-Schenkeln 54 auch in Richtung der Mischerlängsachse L axial übergreifen. Die somit zumindest bereichsweise innerhalb der Haltebereich-Aufnahmeräume 72 liegenden Haltestege 68 können sich somit in Richtung zur Abströmseite 60 des Mischerkörpers 48 nicht aus den Halteabschnitten 50 herausbewegen, sind also gegen übermäßige Axialbewegung gesichert, und sind durch Zusammenwirkung mit den inneren U-Schenkeln 54 im Wesentlichen auch radial zentriert. Somit ist eine definierte Positionierung des Mischerkörpers 48 bezüglich des Trägerelements 24 vorgegeben, wobei aufgrund der Ausgestaltung der Halteabschnitte 50 als durch Umformen von Blechmaterial in ihre gewünschte Form bringbare Laschen, die auch eine gewisse Flexibilität aufweisen, ein Ausgleich von Fertigungstoleranzen ermöglicht ist.

Der Mischerkörper 48 ist mit dem Trägerelement 24 im Bereich der Haltestege 68 bzw. der Halteabschnitte 50 durch Materialschluss, insbesondere durch Verschweißung 74, fest verbunden. Vorzugsweise stellt diese Verschweißung eine Verbindung zwischen den Haltestegen 68 und den inneren U-Schenkeln 54 her, wobei weiter vorzugsweise für eine über den Umfang gleichmäßig stabile Fixierung bei jedem der vier Gegen-Haltebereiche 46 der Mischerkörper 48 durch Verschweißung mit dem Trägerelement 24 materialschlüssig verbunden. Es könnten gleichwohl Gegen-Haltebereiche 46 vorgesehen sein, welche nur für eine Sicherung gegen übermäßige Axialbewegung, nicht aber für die Herstellung einer materialschlüssigen Verbindung genutzt werden. Ferner können Gegen-Haltebereiche und Haltebereiche vorgesehen sein, die nur für die Herstellung der materialschlüssigen Verbindung genutzt werden und bei welchen die Gegen-Haltebereiche nicht notwendigerweise die Haltebereiche radial übergreifen müssen.

Man erkennt in Fig. 5 weiter, dass zwischen dem äußeren U-Schenkel 52 und dem Haltesteg 68 ein Zwischenraum 76 gebildet ist. Im Abgasstrom erwärmt sich die Mischerbaugruppe 26, wobei der beispielsweise aus Metall-Gussmaterial hergestellte Mischerkörper 48 sich stärker thermisch ausdehnen wird, als das im Allgemeinen als Blechumformteil bereitgestellte Trägerelement 24. Durch das Bereitstellen des Zwischenraums 76 wird für diese thermische Ausdehnung des Mischerkörpers 48, insbesondere des ringartigen Verbindungsbereichs 66 desselben, ausreichend Raum geschaffen, in welchem dieser sich radial außendehnen kann, ohne in Kontakt mit dem äußeren U-Schenkel 52 zu kommen. Bei dieser radialen Außendehnung kann der ringartige Verbindungsbereich 66 den bzw. die damit durch die Verschweißungen 74 verbundenen inneren U-Schenkel 54 mit nach radial außen ziehen, was aufgrund des Umstandes, dass das Trägerelement 24 im Bereich seiner U-förmigen Gegen-Haltebereiche 46 mit vergleichsweise großer Flexibilität ausgebildet ist, und aufgrund des Umstandes, dass die inneren U-Schenkel 54 eine größere axiale Erstreckung aufweisen, als die äußeren U-Schenkel 52, ohne die Erzeugung von die Verschweißungen 74 übermäßig belastenden Spannungen möglich ist.

Im Betrieb ist die Mischerbaugruppe 26 einer vergleichsweise hohen mechanischen Belastung ausgesetzt, insbesondere durch die in einem Fahrzeug auftretenden Vibrationen und die hohen Temperaturen in der Abgasanlage 10. Unter ungünstigen Umständen kann dies zu einer Beschädigung der materialschlüssigen Verbindung führen, so dass sich im Extremfall der Mischerkörper 48 vom Trägerelement 24 lösen könnte. Da durch die Zusammenwirkung der Haltebereiche 70 mit den Gegen-Haltebereichen 46 der Mischerkörper 48 gegen ein Loslösen vom Trägerelement 24 in Richtung stromabwärts, also in Richtung auf das Strömungsführungselement 16 und die Katalysatoranordnung 28 zu, gehalten ist, besteht nicht die Gefahr, dass in einem derartigen Zustand der Mischerkörper 48, dessen Außenabmessung, beispielsweise Außendurchmesser, im Allgemeinen zumindest nicht größer sein wird, als die Innenabmessung, also beispielsweise der Innendurchmesser, des Abgasführungselements 16, sich in dieses Abgasführungselement 16 hinein und zur Katalysatoranordnung 28 bewegen kann. Zwar können nach dem im Fall eines Ausfalls der materialschlüssigen Verbindung auftretenden Loslösen des Mischerkörpers 48 vom Trägerelement 24 Klappergeräusche auftreten, doch wird eine Beschädigung stromabwärtiger Systembereiche vermieden. Die Mischerbaugruppe 26 kann somit nach Entkoppeln der beiden Abgasführungselemente 14, 16 voneinander entfernt und durch eine neue ersetzt werden.

Eine Abgasanlage gemäß dem Oberbegriff des Anspruchs 1 ist aus der DE 10 2014 215 083 A1 bekannt. Eine Mischerbaugruppe gemäß dem Oberbegriff des Anspruchs 6 ist aus der DE 20 2012 011 764 U1 bekannt.

Es ist die Aufgabe der vorliegenden Erfindung, eine eine effiziente Durchmischung von Abgas und Reaktionsmittel gewährleistende, gegen Loslösen von der Abgasanlage gesicherte Mischerbaugruppe sowie eine eine derartige Mischerbaugruppe enthaltende Abgasanlage vorzusehen.

Erfindungsgemäß wird diese Aufgabe gelöst durch eine Abgasanlage, insbesondere für eine Fahrzeugbrennkraftmaschine, gemäß Anspruch 1 diese umfasst eine Mischerbaugruppe mit einem Mischerkörper mit einer Anströmseite und einer Abströmseite und einem plattenartigen Trägerelement mit einem bezüglich des Mischerkörpers bezüglich einer Mischerlängsachse radial außen angeordneten Trägerelementenkörper, wobei der Mischerkörper eine Mehrzahl von Strömungsablenkelementen und wenigstens einen Haltebereich umfasst, wobei das Trägerelement in Zuordnung zu wenigstens einem Haltebereich einen Gegen-Haltebereich umfasst, wobei wenigstens ein Gegen-Haltebereich mit einem Haltebereich materialschlüssig verbunden ist, und wobei wenigstens ein Gegen-Haltebereich einen Haltebereich an einer in Richtung Abströmseite des Mischerkörpers orientierten Seite wenigstens teilweise radial übergreift, wobei die Mischerbaugruppe in einem Angrenzungsbereich zweier beispielsweise rohrartiger Abgasführungselemente aneinander angeordnet ist, wobei jedes der Abgasführungselemente in dem Angrenzungsbereich einen flanschartigen Kopplungsabschnitt zur Kopplung mit dem Kopplungsabschnitt des jeweils anderen Abgasführungselements umfasst, wobei der Trägerelementenkörper der Mischerbaugruppe zwischen den flanschartigen Kopplungsabschnitten der Abgasführungselemente angeordnet ist, und wobei ein die flanschartigen Kopplungsabschnitte wenigstens bereichsweise radial außen umgebendes und an ihren voneinander abgewandt orientierten Axialseiten nach radial innen übergreifendes Kopplungselement vorgesehen ist.

Mit dem erfindungsgemäßen Aufbau einer Abgasanlage ist nicht nur eine zuverlässige Halterung des Mischerkörpers am Trägerelement gewährleistet, sondern ist auch eine einfach zu realisierende, stabile und insbesondere auch gasdichte Eingliederung des Trägerelements zwischen zwei abgasführende Komponenten einer Abgasanlage gewährleistet.

Hierzu wird insbesondere auch vorgeschlagen, dass die voneinander abgewandt orientierten Axialseiten der flanschartigen Kopplungsabschnitte nach radial außen aufeinander zu verlaufen, und dass das Kopplungselement einen nach radial außen sich verjüngenden Aufnahmeraum für die flanschartigen Kopplungsabschnitte aufweist.

Um bei der erfindungsgemäßen Mischerbaugruppe über den gesamten Umfang eine im Wesentlichen gleichmäßige Haltewechselwirkung zwischen dem Trägerelement und dem Mischerkörper erreichen zu können, wird vorgeschlagen, dass an dem Trägerelementenkörper eine Mehrzahl von Gegen-Haltebereichen sich mit Umfangsabstand zueinander nach radial innen erstreckend vorgesehen ist.

Das Trägerelement kann zum Erhalt eines einfach und kostengünstig zu realisierenden und die thermischen Anforderungen in einer Abgasanlage erfüllenden Aufbaus als Blech-Umformbauteil ausgebildet sein.

Für eine weiter verbesserte Haltewechselwirkung zwischen dem Trägerelement und dem Mischerkörper ist vorgesehen, dass wenigstens ein Gegen-Haltebereich einen zugeordneten Haltebereich wenigstens teilweise axial übergreift.

Um dabei den Mischerkörper gegen übermäßige Radialbewegung zu sichern, ist weiter vorgesehen, dass wenigstens ein Gegen-Haltebereich den zugeordneten Haltebereich radial innen axial übergreift.

Für einen eine stabile und sichere Halterung gewährleistenden, gleichzeitig auch einen Toleranzausgleich zulassenden Aufbau umfasst wenigstens ein Gegen-Haltebereich einen im Wesentlichen U-förmigen Halteabschnitt mit zwei U-Schenkeln und einen diese verbindenden Verbindungsbereich, wobei die U-Schenkel und der Verbindungsbereich einen im Wesentlichen in Richtung zur Anströmseite des Mischerkörpers offenen Haltebereich-Aufnahmeraum umgrenzen. Da der Haltebereich-Aufnahmeraum in Richtung zur Anströmseite offen ist, ist er in Richtung zur Abströmseite gegen einen Austritt des darin aufgenommenen Haltebereichs des Mischerkörpers nicht offen, so dass ein Bewegen des Mischerkörpers auch bei Ausfall der materialschlüssigen Verbindung in Richtung stromabwärts aus dem Haltebereich-Aufnahmeraum heraus nicht möglich ist.

Um insbesondere unter Berücksichtigung verschiedener thermischer Ausdehnungen des Mischerkörpers einerseits und des Trägerelements andererseits eine über eine lange Betriebslebensdauer hinweg stabile Verbindung gewährleisten zu können, ist ferner vorgesehen, dass einer der U-Schenkel radial außen bezüglich eines in dem Haltebereich-Aufnahmeraum angeordneten Haltebereichs angeordnet ist, dass einer der U-Schenkel radial innen bezüglich des in dem Haltebereich-Aufnahmeraum angeordneten Haltebereichs angeordnet ist, und dass der Haltebereich mit dem radial innen bezüglich diesem angeordneten U-Schenkel verbunden ist oder und zwischen dem Haltebereich und dem radial außen bezüglich diesem angeordneten U-Schenkel ein Zwischenraum vorgesehen ist.

Wenn der Mischerkörper im Bereich wenigstens eines, vorzugsweise jedes einen Haltebereich radial übergreifenden Gegen-Haltebereichs mit dem Trägerelement materialschlüssig verbunden ist, kann in diesen miteinander zusammenwirkenden Haltebereichen bzw. Gegen-Haltebereichen sowohl die materialschlüssige, als auch die formschlüssige Verbindung realisiert werden, und somit eine effiziente Ausnutzung der vorgesehenen Haltebereiche bzw. Gegen-Haltebereiche gewährleistet werden.

Um im Bereich des Mischerkörpers eine stabile und die Strömungsführung im Wesentlichen nicht beeinträchtigende Ausgestaltung realisieren zu können, wird vorgeschlagen, dass wenigstens ein Haltebereich an einen radial äußeren Bereich wenigstens eines Strömungsablenkelements anschließt. Insbesondere kann dabei vorgesehen sein, dass wenigstens ein Haltebereich einen zwei Strömungsablenkelemente miteinander verbindenden Haltesteg umfasst.

Für einen hinsichtlich der Strömungsführung besonders vorteilhaften, symmetrischen Aufbau wird vorgeschlagen, dass wenigstens ein Teil der, vorzugsweise alle Strömungsablenkelemente in Umfangsrichtung aufeinanderfolgend angeordnet sind, und dass an einem radial äußeren Bereich wenigstens eines Teils der, vorzugsweise aller Strömungsablenkelemente ein diese Strömungsablenkelemente miteinander verbindender, ringartiger und wenigstens einen Haltesteg bereitstellender Verbindungsbereich vorgesehen ist. Dabei kann bei Aufbau des Mischerkörpers beispielsweise als Metallgussbauteil der Verbindungsbereich mit den durch diesen verbundenen Strömungsablenkelementen integral ausgebildet sein.

Gemäß einem weiteren Aspekt der vorliegenden Erfindung wird die eingangs angegebene Aufgabe gelöst durch eine Mischerbaugruppe, insbesondere für eine Abgasanlage einer Fahrzeugbrennkraftmaschine, gemäß Anspruch 6. Diese umfasst einen Mischerkörper mit einer Anströmseite und einer Abströmseite und ein Trägerelement mit einem bezüglich des Mischerkörpers bezüglich einer Mischerlängsachse radial außen angeordneten bzw. diesen radial außen umgebenden, ringartigen Trägerelementenkörper, wobei der Mischerkörper eine Mehrzahl von Strömungsablenkelementen und wenigstens einen Haltebereich umfasst, wobei das Trägerelement in Zuordnung zu wenigstens einem Haltebereich einen Gegen-Haltebereich umfasst, wobei wenigstens ein Gegen-Haltebereich mit einem Haltebereich materialschlüssig verbunden ist, wobei wenigstens ein Gegen-Haltebereich einen Haltebereich an einer in Richtung Abströmseite des Mischerkörpers orientierten Seite wenigstens teilweise radial übergreift, wobei der ringartige Trägerelementenkörper an der in Richtung Abströmseite des Mischerkörpers orientierten Seite des wenigstens einen Haltebereichs angeordnet ist.

Mit einer derart aufgebauten Mischerbaugruppe wird bei insbesondere axial sehr kompakter Bauweise eine stabile und gegen vollständiges Loslösen vom Trägerelement sichere Halterung eines Mischerkörpers gewährleistet.

Für eine über den Umfang im Wesentlichen gleichmäßige wirkende Halterung wird vorgeschlagen, dass an dem Trägerelementenkörper eine Mehrzahl von Gegen-Haltebereichen sich mit Umfangsabstand zueinander nach radial innen erstreckend vorgesehen ist.

Eine erhöhte Sicherheit gegen ein Loslösen des Mischerkörpers wird weiter dadurch gewährleistet, dass wenigstens ein Gegen-Haltebereich einen zugeordneten Haltebereich wenigstens teilweise axial übergreift, wobei vorgesehen ist, dass wenigstens ein Gegen-Haltebereich den zugeordneten Haltebereich radial innen axial übergreift.

Die vor allem axial kompakte Bauart kann dadurch unterstützt werden, dass wenigstens ein Gegen-Haltebereich einen den zugeordneten Haltebereich an seiner in Richtung Abströmseite des Mischerkörpers orientierten Seite radial übergreifenden ersten Schenkel und einen an den ersten Schenkel anschließenden und den zugeordneten Haltebereich radial innen axial übergreifenden zweiten Schenkel aufweist.

Hierzu kann bei einer baulich sehr einfach zu realisierenden erfindungsgemäßen Ausgestaltungsart vorgesehen sein, dass der erste Schenkel sich ausgehend von dem ringartigen Trägerelementenkörper nach radial innen erstreckt.

Bei einer alternativen Ausgestaltungsart kann der erste Schenkel sich ausgehend von einem dritten Schenkel nach radial innen erstrecken, wobei der dritte Schenkel sich in einer einer Erstreckungsrichtung des zweiten Schenkels entgegengesetzten Erstreckungsrichtung und mit Radialversatz zum zweiten Schenkel ausgehend vom ersten Schenkel erstreckt. Hierzu kann insbesondere vorgesehen sein, dass der dritte Schenkel sich ausgehend vom ringartigen Trägerelementenkörper im Wesentlichen axial in Richtung zum zweiten Schenkel erstreckt.

Für eine stabile Festlegung des Trägerelements an einer abgasführenden Komponente einer Abgasanlage wird vorgeschlagen, dass an dem ringartigen Trägerelementenkörper wenigstens ein, vorzugsweise eine Mehrzahl von sich im Wesentlichen nach radial außen erstreckenden Haltevorsprüngen zur Halterung des Trägerelementenkörpers an einem rohartigen Abgasführungselement vorgesehen ist.

Dabei kann für eine in sich stabile Konfiguration des Trägerelements wenigstens ein Haltevorsprung einen ersten Schenkel radial fortsetzen.

Der ringartige Trägerelementenkörper kann z.B. ringscheibenartig ausgebildet sein, was im Sinne der vorliegenden Erfindung bedeutet, dass dessen axiale Dicke zumindest nicht oder nicht wesentlich größer ist, als die radiale Querschnittsabmessung bzw. Materialstärke des Trägerelementenkörpers. Alternativ kann der ringartige Trägerelementenkörper rohrartig ausgebildet sein.

Ferner betrifft die vorliegende Erfindung eine Abgasanlage, insbesondere für eine Fahrzeugbrennkraftmaschine, umfassend eine vorangehend beschriebene Mischerbaugruppe.

Bei dieser Abgasanlage kann ein rohrartiges Abgasführungselement in Zuordnung zu dem wenigstens einen Haltevorsprung eine in dem rohrartigen Abgasführungselement zu einem axialen Ende offene, den Haltevorsprung aufnehmende Halteaussparung aufweisen, und axial anschließend an den wenigstens einen in einer Halteaussparung aufgenommenen Haltevorsprung kann ein das rohrartige Abgasführungselement ringartig umgebender flanschartiger Kopplungsabschnitt vorgesehen ist.

Eine stabile und auch gasdichte Halterung des Trägerelements kann dadurch erreicht werden, dass der flanschartige Kopplungsabschnitt zusammen mit dem wenigstens einen Haltevorsprung durch Verschweißen am rohrartigen Abgasführungselement festgelegt ist.

Die vorliegende Erfindung wird nachfolgend mit Bezug auf die beiliegenden Figuren detailliert beschrieben. Es zeigt:
- Fig. 1: eine aus dem Stand der Technik bekannte Abgasanlage einer Fahrzeugbrennkraftmaschine;
- Fig. 2: eine perspektivische Ansicht einer Mischerbaugruppe der Abgasanlage der Fig. 1;
- Fig. 3: eine Seitenansicht der Mischerbaugruppe der Fig. 2;
- Fig. 4: eine Längsschnittansicht der Mischerbaugruppe der Fig. 2;
- Fig. 5: eine vergrößerte Ansicht des Details V in Fig. 4;
- Fig. 6: eine perspektivische Ansicht einer alternativen Ausgestaltung einer Mischerbaugruppe;
- Fig. 7: die Mischerbaugruppe der Fig. 6 in Verbindung mit einem rohrartigen Abgasführungselement;
- Fig. 8: eine die Mischerbaugruppe der Fig. 6 enthaltende Abgasanlage;
- Fig. 9: eine perspektivische Ansicht einer alternativen Ausgestaltungsart einer Mischerbaugruppe;
- Fig. 10: die Mischerbaugruppe der Fig. 9 in Verbindung mit einem rohrartigen Abgasführungselement;
- Fig. 11: eine perspektivische Ansicht einer alternativen Ausgestaltungsart einer Mischerbaugruppe;
- Fig. 12: ein rohrartiges Abgasführungselement einer Abgasanlage mit der Mischerbaugruppe in der Fig. 11;
- Fig. 13: das Abgasführungselement der Fig. 12 mit einem daran angebrachten, flanschartigen Kopplungsabschnitt.

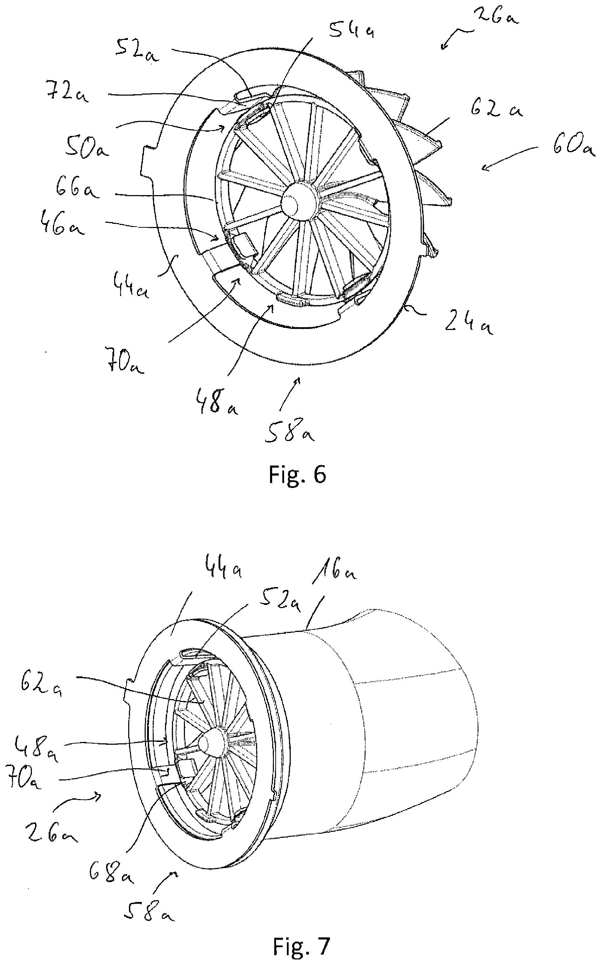

Mit Bezug auf die Fig. 6-8 wird nachfolgend eine Ausgestaltung einer erfindungsgemäß aufgebauten Abgasanlage beschrieben, bei welcher die in Verbindung mit zwei rohrartigen Abgasführungselementen vorgesehene Mischerbaugruppe im Wesentlichen dem vorangehend mit Bezug auf die Fig. 2-5 beschriebenen Aufbau entspricht. Es wird daher bezüglich des Aufbaus der in den Fig. 6-8 dargestellten Mischerbaugruppe, insbesondere des Trägerelements derselben und des am Trägerelement getragenen Mischerkörpers, auf die voranstehenden Ausführungen zu dem in den Fig. 2-5 dargestellten Aufbau einer Mischerbaugruppe verwiesen. Sofern nicht ausdrücklich darauf hingewiesen wird, entsprechen die dort gezeigten und beschriebenen Ausgestaltungsmerkmale auch dem in den Fig. 6-8 dargestellten und mit Bezug auf diese Fig. beschriebenen Aufbau der Mischerbaugruppe.

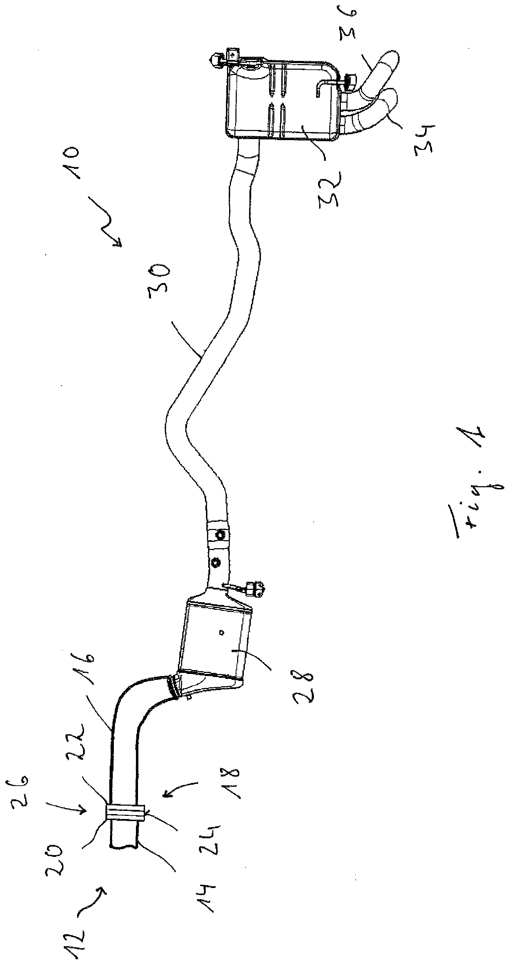

In Verbindung mit der mit Bezug auf die Fig. 6-8 beschriebenen Abgasanlage werden für gleiche Komponenten bzw. Baugruppen die gleichen Bezugszeichen verwendet, wie mit Bezug auf die Fig. 1-5, jedoch unter Hinzufügung des Anhangs "a". Die Fig. 6-8 zeigen die Integration der Mischerbaugruppe 26a in den Angrenzungsbereich zweier rohrartiger Abgasführungselemente 14a, 16a aneinander. Dabei kann das Abgasführungselement 14a beispielsweise ein von einem stromaufwärtigen Systembereich, wie z. B. einem Partikelfilter, der Abgasanlage 10a weggeführtes Rohr bzw. ein Rohrstutzen sein, während die rohrartige Abgasführungskomponente 16a beispielsweise ein zu einem weiter stromabwärts positionierten Katalysator oder einer sonstigen Baugruppe führendes Vorrohr sein kann.

An jedem der beiden rohrartigen Abgasführungselemente 14a, 16a ist ein ringartig ausgestalteter, flanschartiger Kopplungsabschnitt 20a, 22a beispielsweise durch Verschweißung festgelegt. Die beiden flanschartigen Kopplungsabschnitte 20a, 22a weisen einander zugewandt zu positionierende und zwischen sich den plattenartig gestalteten Trägerelementenkörper 44a aufnehmende Abstützflächen 80a, 82a auf, die im Wesentlichen orthogonal zur Längsachse der jeweiligen Abgasführungselemente 14a, 16a bzw. auch orthogonal zur Mischerlängsachse L orientiert sein können. An ihren voneinander abgewandt orientierten Axialseiten 84a, 86a sind die Kopplungsabschnitte 20a, 22a derart geformt, dass diese Axialseiten 84a, 86a nach radial außen aufeinander zu verlaufen, so dass sich eine insgesamt nach radial außen sich verjüngende Struktur der beiden über den Trägerelementenkörper 44a aneinander abgestützten Kopplungsabschnitte 20a, 22a ergibt. Zumindest in Zusammenwirkung mit einem der Kopplungsabschnitte 20a, 22a, hier mit dem Kopplungsabschnitt 20a, ist ein beispielsweise O-ringartiges Dichtelement 88a vorgesehen und in einer entsprechenden nutartigen Einsenkung aufgenommen, um die Sicherheit gegen einen ungewollten Gasaustritt zu erhöhen. Ein entsprechendes Dichtelement könnte auch in Verbindung mit dem anderen Kopplungsabschnitt 22a eingesetzt werden.

Um einen stabilen Zusammenhalt zu gewährleisten, ist ein die beiden Kopplungsabschnitte 20a, 22a radial außen zumindest bereichsweise umgreifendes Kopplungselement 90a vorgesehen. Die Formgebung des Kopplungselements 90a ist an die nach außen sich verjüngende Struktur der beiden gegeneinander abgestützten Kopplungsabschnitte 20a, 22a angepasst, so dass das Kopplungselement 90a einen nach radial außen sich verjüngenden Aufnahmeraum 92a für die beiden Kopplungsabschnitte 20a, 22a umfasst. Somit weist das Kopplungselement eine näherungsweise V-förmige Querschnittsstruktur auf, welche dafür sorgt, dass bei einer Verspannung des Kopplungselements 90a in Umfangsrichtung und damit einer Beaufschlagung der beiden Kopplungsabschnitte auch nach radial innen die beiden Kopplungsabschnitte 20a, 22a axial gegeneinander gepresst und somit stabil und gasdicht aneinander gehalten werden. Um dies zu erreichen, kann das Kopplungselement mit mehreren in Umfangsrichtung aufeinander folgenden und beispielsweise gelenkig miteinander verbundenen Segmenten ausgebildet sein, wobei zwischen zwei dieser Segmenten ein Spannelement, wie z. B. eine Spannschraube oder dergleichen vorgesehen sein kann.

Mit dieser Anordnung wird die Mischerbaugruppe 24a im Bereich ihres Trägerelementenkörpers 44a fest zwischen den beiden Kopplungsabschnitten 20a, 22a gehalten. Da bei dieser Ausgestaltungsform der Mischerbaugruppe 24a die den Mischerkörper 48a tragenden Halteabschnitte 50a, insbesondere die radial äußeren U-Schenkel 52a, sich von dem bezüglich des Mischerkörpers 48a radial außen angeordneten Trägerelementenkörper 44a weiter axial erstrecken, als bei der in den Fig. 2-5 dargestellten Ausgestaltungsform, liegt der somit im wesentlichen axial versetzt zum Trägerelementenkörper 44a positionierte Mischerkörper 48a im Wesentlichen vollständig innerhalb des Abgasführungselements 16a.

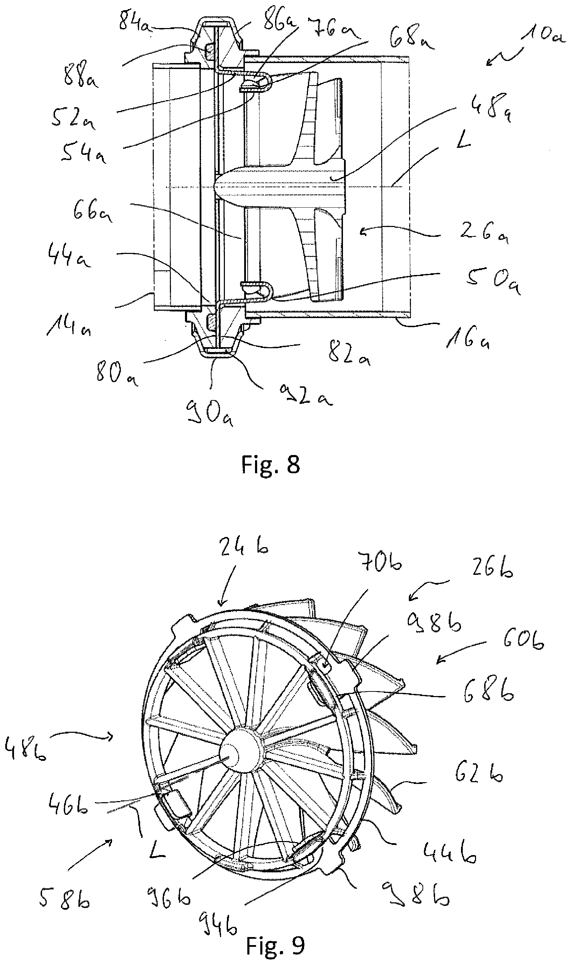

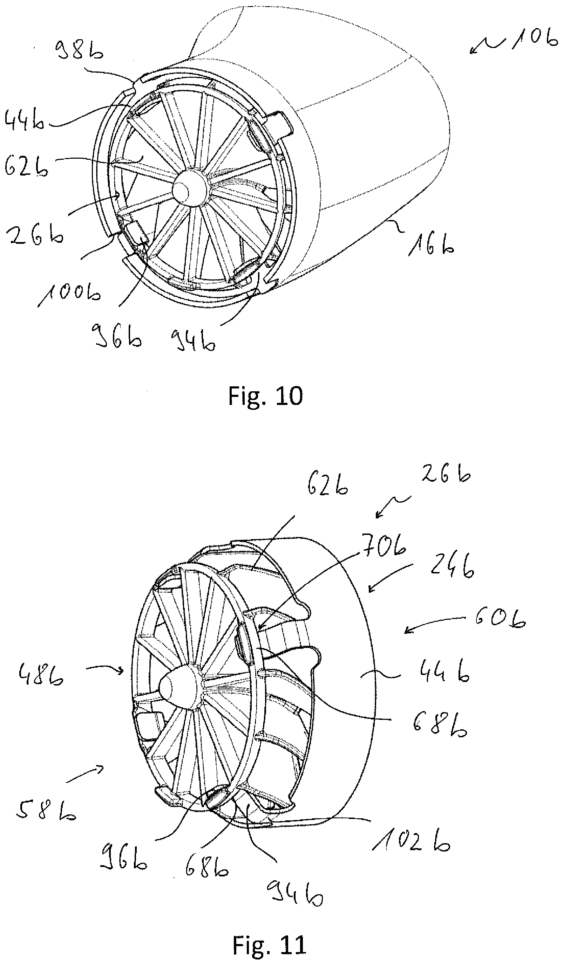

Die Fig. 9 und 10 zeigen eine alternative Ausgestaltungsart einer Mischerbaugruppe und eine alternative Art der Integration der Mischerbaugruppe in eine Abgasanlage bzw. ein rohrartiges Abgasführungselement derselben. Baugruppen oder Komponenten, welche vorangehend beschriebenen Baugruppen oder Komponenten hinsichtlich Aufbau bzw. Funktion entsprechen, sind mit dem gleichen Bezugszeichen unter Hinzufügung des Anhangs "b" bezeichnet.

Ein substantieller konstruktiver Unterschied besteht bei dem in den Fig. 9 und 10 dargestellten Aufbau darin, dass der ringartige Trägerelementenkörper 44b bezüglich des Mischerkörpers 48b derart orientiert ist, dass er an der in Richtung Abströmseite 60b des Mischerkörpers 48b orientierten Seite der am Mischerkörper 48b gebildeten Haltebereiche 70b positioniert ist. Das Trägerelement 24b weist, ausgehend von dem ringartigen Trägerelementenkörper 44b, nach radial innen sich erstreckende erste Schenkel 94b auf. Diese übergreifen die am Mischerkörper 48b gebildeten Haltebereiche 70b in radialer Richtung und stellen somit jeweilige Gegenhaltebereiche 46b bereit, an welchen der Mischerkörper 48b sich in axialer Richtung abstützen kann.

Radial innerhalb der Haltebereiche 70b bzw. der diese bereitstellenden Haltestege 68b des Mischerkörpers 48b schließen an die näherungsweise radial sich erstreckenden ersten Schenkel 94b im Wesentlichen axial sich erstreckende zweite Schenkel 96b an, welche die Haltestege 68b bzw. die Haltebereiche 70b an ihrer radialen Innenseite zumindest teilweise axial übergreifen. Mit diesen zweiten Schenkeln 96b oder/und den ersten Schenkeln 94b ist der Mischerkörper 48b im Bereich seiner Haltestege 68b beispielsweise durch Verschweißung verbunden. Auf diese Art und Weise wird eine feste und definierte Positionierung des Mischerkörpers 48b bezüglich des Trägelements 24b gewährleistet. Sollte diese feste Verbindung zerstört werden, verhindern die den Mischerkörper 48b radial und axial übergreifenden Gegen-Haltebereiche 46b ein ungewolltes Bewegen des Mischerkörpers 48b in Richtung zu einer stromabwärts positionierten Komponente der Abgasanlage 10b.

In denjenigen Umfangsbereichen, in welchen die ersten Schenkel 94b an den Trägerelementenkörper 44b anschließen, erstrecken sich vom Trägerelementenkörper 44b die ersten Schenkel 94b im Wesentlichen radial fortsetzende Haltevorsprünge 98b. In Zuordnung zu diesen Haltevorsprüngen 98b können an einem die Mischerbaugruppe 26b aufnehmenden rohrartigen Abgasführungselement 16b zu dessen axialen Ende hin axial offene Halteaussparungen 100b vorgesehen sein. Beim axialen Einsetzen der Mischerbaugruppe 26b in das Abgasführungselement 16b treten die Haltevorsprünge 98b in die Halteaussparungen 100b ein und sorgen somit für eine definierte axiale Abstützung und auch eine Umfangshalterung der Mischerbaugruppe 26b an dem Abgasführungselement 16b. Nachfolgend kann ein ringartiger Kopplungsabschnitt, wie er beispielsweise in Form des Kopplungsabschnitts 22a in Fig. 8 dargestellt ist, auf das axiale Ende des rohrartigen Abgasführungselements 16b aufgeschoben und durch Verschweißung daran festgelegt werden. Dabei können auch die nach radial außen in die Halteaussparungen 100b eingreifenden Haltevorsprünge 98b am Abgasführungselement 16b bzw. dem daran durch Verschweißung festgelegten Kopplungsabschnitt festgelegt werden, und es können die Halteaussparungen 100b gasdicht verschlossen werden.

Der in den Fig. 9 und 10 dargestellte Aufbau weist eine axial kompakte Baugröße auf, da das Trägerelement 24b im Wesentlichen vollständig im axialen Erstreckungsbereich des Mischerkörpers 48b angeordnet ist. Der ringartige Trägerelementenkörper 44b ist so dimensioniert, dass er im Inneren des rohrartigen Abgasführungselements 16b aufgenommen werden kann. Dazu weist der ringartige Trägerelementenkörper 44b eine vergleichsweise geringe Radialerstreckung auf, um eine möglichst geringe Strömungseinschnürung hervorzurufen. Beispielsweise könnte, betrachtet im Querschnitt, die axiale Dicke des ringartigen Trägerelementenkörpers 44b näherungsweise auch der Radialabmessung entsprechen bzw. etwas kleiner oder größer sein. Im Sinne der vorliegenden Erfindung wird ein derart dimensionierter ringartiger Trägerelementenkörper 44b als ringscheibenartig betrachtet.

Die Fig. 11-13 zeigen eine Ausgestaltungsvariante, bei welcher der ringartige Trägerelementenkörper 44b gleichermaßen an der in Richtung Abströmseite 60b orientierten Seite der Haltebereiche 70b des Mischerkörpers 48b angeordnet ist. Die Gegen-Haltebereiche 46b umfassen wiederum die ersten Schenkel 94b, mit welchen diese die Haltebereiche 70b am Mischerelementenkörper 48b nach radial innen übergreifen, sowie die von den ersten Schenkeln 94b näherungsweise in Richtung der Mischerlängsachse L sich erstreckenden und die Haltebereiche 70b an deren radialer Innenseite zumindest teilweise übergreifenden zweiten Schenkel 96b. Der Trägerelementenkörper 44b weist in dieser Ausgestaltungsart eine im Wesentlichen zylindrische Struktur auf, ist somit in axialer Richtung wesentlich stärker ausgedehnt, als in radialer Richtung, wobei hier die radiale Wandungsstärke betrachtet wird. Zur Anbindung der ersten Schenkel 94b an diesen im Wesentlichen zylindrisch oder rohrartig gestalteten, ringartigen Mischerkörper 48b sind dritte Schenkel 102b vorgesehen, welche, ausgehend vom ringartigen und rohrartigen bzw. zylindrischen Trägerelementenkörper 44b, sich im Wesentlichen axial erstrecken. Somit wird eine Struktur der Gegen-Haltebereiche 46b erhalten, bei welcher die ersten Schenkel 94b sich von radial außen nach radial innen, beispielsweise mit radialer Erstreckung oder schräg angestellt, erstrecken und die zweiten bzw. dritten Schenkel 96b, 102b sich, ausgehend von ihrem Anschluss an den jeweiligen ersten Schenkel 94b zueinander radial versetzt in entgegengesetzter axialer Richtung erstrecken.

Auch bei dieser Ausgestaltungsart ist der Mischerkörper 48b im Bereich seiner Haltebereiche 70b bzw. der diese bereitstellenden Haltestege 68b mit den Gegen-Haltebereichen 46b beispielsweise im Bereich der zweiten Schenkel 96b oder/und der ersten Schenkel 94b durch Verschweißung verbunden.

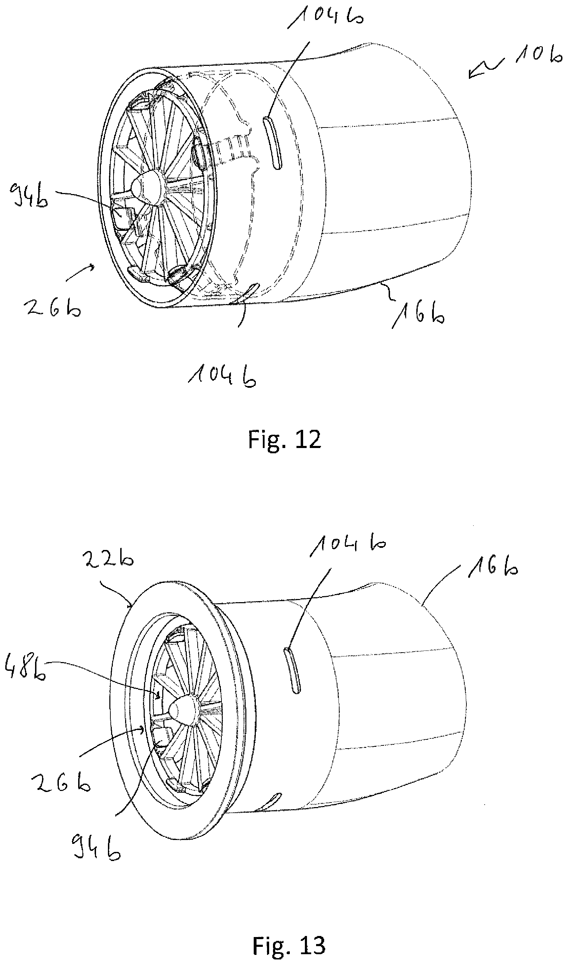

Die Fig. 12 und 13 zeigen die Integration einer so aufgebauten Mischerbaugruppe 26b in ein rohrartiges Abgasführungselement 16b. Der Mischerkörper 48b wird in das axiale Ende des rohrartigen Abgasführungselements 16b eingeführt, bis er in einem axialen Bereich liegt, in welchem im rohrartigen Abgasführungselement 16b beispielsweise schlitzartige Öffnungen 104b vorgesehen sind. Im Bereich dieser schlitzartigen Öffnungen 104b kann von außen her der Trägerelementenkörper 44b durch Verschweißung mit dem Abgasführungselement 16b fest verbunden werden, wobei gleichzeitig auch die Öffnungen 104b gasdicht abgeschlossen werden. Es kann dann weiterhin ein in Fig. 13 dargestellter, ringartig ausgebildeter flanschartiger Kopplungsabschnitt 22b auf das axiale Ende des rohrartigen Abgasführungselements 16b aufgeschoben und daran durch Verschweißung festgelegt werden, so dass das die Mischerbaugruppe 26b enthaltende Abgasführungselement 16b dann mit einem von stromaufwärts herangeführten weiteren rohrartigen Abgasführungselement verbunden werden kann, beispielsweise unter Einsatz eines Kopplungselements, wie es mit Bezug auf die Fig. 8 bereits beschrieben wurde.

## Patentansprüche

1. Abgasanlage, insbesondere für eine Fahrzeugbrennkraftmaschine, umfassend eine Mischerbaugruppe (26a) mit einem Mischerkörper (48a) mit einer Anströmseite (58a) und einer Abströmseite (60a) und einem plattenartigen Trägerelement (24a) mit einem bezüglich des Mischerkörpers (48a) bezüglich einer Mischerlängsachse (L) radial außen angeordneten, ringartig ausgebildeten Trägerelementenkörper (44a), wobei der Mischerkörper (48a) eine Mehrzahl von Strömungsablenkelementen (62a) und wenigstens einen Haltebereich (70a) umfasst, wobei das Trägerelement (24a) in Zuordnung zu wenigstens einem Haltebereich (70a) einen Gegen-Haltebereich (46a) umfasst, wobei wenigstens ein Gegen-Haltebereich (46a) mit einem Haltebereich (70a) materialschlüssig verbunden ist, wobei die Mischerbaugruppe (26a) in einem Angrenzungsbereich (18a) zweier vorzugsweise rohrartiger Abgasführungselemente (14a, 16a) aneinander angeordnet ist, wobei jedes der Abgasführungselemente (14a, 16a) in dem Angrenzungsbereich (18a) einen flanschartigen Kopplungsabschnitt (20a, 22a) zur Kopplung mit dem Kopplungsabschnitt (20a, 22a) des jeweils anderen Abgasführungselements (14a, 16a) umfasst, wobei der Trägerelementenkörper (44a) der Mischerbaugruppe (26a) zwischen den flanschartigen Kopplungsabschnitten (20a, 22a) der Abgasführungselemente (14a, 16a) angeordnet ist,
**dadurch gekennzeichnet,**
- **dass** wenigstens ein Gegen-Haltebereich (46a) einen Haltebereich (70a) an einer in Richtung Abströmseite (60a) des Mischerkörpers (48a) orientierten Seite wenigstens teilweise radial und radial innen axial übergreift,
- **dass** der wenigstens eine Gegen-Haltebereich (46a) einen im Wesentlichen U-förmigen Halteabschnitt (50a) mit zwei U-Schenkeln (52a, 54a) und einen diese verbindenden Verbindungsbereich (56a) umfasst, wobei die U-Schenkel (52a, 54a) und der Verbindungsbereich (56a) einen im Wesentlichen in Richtung zur Anströmseite (58a) des Mischerkörpers (48a) offenen Haltebereich-Aufnahmeraum (72a) umgrenzen,
- **dass** einer der U-Schenkel (52a, 54a) radial außen bezüglich des in dem Haltebereich-Aufnahmeraum (72a) angeordneten Haltebereichs (70a) angeordnet ist, einer der U-Schenkel (52a, 54a) radial innen bezüglich des in dem Haltebereich-Aufnahmeraum (72a) angeordneten Haltebereichs (70a) angeordnet ist, und der Haltebereich (70a) mit dem radial innen bezüglich diesem angeordneten U-Schenkel (54a) verbunden ist, und
- **dass** ein die flanschartigen Kopplungsabschnitte (20a, 22a) wenigstens bereichsweise radial außen umgebendes und an ihren voneinander abgewandt orientierten Axialseiten nach radial innen übergreifendes Kopplungselement vorgesehen ist.

2. Abgasanlage nach Anspruch 1, **dadurch gekennzeichnet,**
**dass** die voneinander abgewandt orientierten Axialseiten der flanschartigen Kopplungsabschnitte (20a, 22a) nach radial außen aufeinander zu verlaufen, und dass das Kopplungselement einen nach radial außen sich verjüngenden Aufnahmeraum für die flanschartigen Kopplungsabschnitte (20a, 22a) aufweist,
oder/und
**dass** an dem Trägerelementenkörper (44a) eine Mehrzahl von Gegen-Haltebereichen (46a) sich mit Umfangsabstand zueinander nach radial innen erstreckend vorgesehen ist.

3. Abgasanlage nach einem der vorangehenden Ansprüche, **dadurch gekennzeichnet, dass** zwischen dem Haltebereich (70a) und dem radial außen bezüglich diesem angeordneten U-Schenkel (52a) ein Zwischenraum (76a) vorgesehen ist.

4. Abgasanlage nach einem der vorangehenden Ansprüche, **dadurch gekennzeichnet,**
**dass** der Mischerkörper (46a) im Bereich wenigstens eines, vorzugsweise jedes einen Haltebereich (70a) radial übergreifenden Gegen-Haltebereichs (46a) mit dem Trägerelement (24a) materialschlüssig verbunden ist, oder/und
**dass** wenigstens ein Haltebereich (70a) an einen radial äußeren Bereich wenigstens eines Strömungsablenkelements (62a) anschließt, wobei vorzugsweise wenigstens ein Haltebereich (70a) einen zwei Strömungsablenkelemente (62a) miteinander verbindenden Haltesteg (68a) umfasst.

5. Abgasanlage nach Anspruch 4, **dadurch gekennzeichnet, dass** wenigstens ein Teil der, vorzugsweise alle Strömungsablenkelemente (62a) in Umfangsrichtung aufeinanderfolgend angeordnet sind, und dass an einem radial äußeren Bereich wenigstens eines Teils der, vorzugsweise aller Strömungsablenkelemente (62a) ein diese Strömungsablenkelemente (62a) miteinander verbindender, ringartiger und wenigstens einen Haltesteg (68a) bereitstellender Verbindungsbereich (66a) vorgesehen ist, wobei vorzugsweise der Verbindungsbereich (66a) mit den durch diesen verbundenen Strömungsablenkelementen (62a) integral ausgebildet ist.

6. Mischerbaugruppe, insbesondere für eine Abgasanlage einer Fahrzeugbrennkraftmaschine, umfassend einen Mischerkörper (48b) mit einer Anströmseite (58b) und einer Abströmseite (60b) und ein Trägerelement (24b) mit einem bezüglich des Mischerkörpers (48b) bezüglich einer Mischerlängsachse (L) radial außen angeordneten, ringartigen Trägerelementenkörper (44b), wobei der Mischerkörper (48b) eine Mehrzahl von Strömungsablenkelementen (62b) und wenigstens einen Haltebereich (70b) umfasst, wobei der ringartige Trägerelementenkörper an der in Richtung Abströmseite (60b) des Mischerkörpers (48b) orientierten Seite des wenigstens einen Haltebereichs (70b) angeordnet ist, wobei das Trägerelement (24b) in Zuordnung zu wenigstens einem Haltebereich (70b) einen Gegen-Haltebereich (46b) umfasst, wobei wenigstens ein Gegen-Haltebereich (46b) einen Haltebereich (70b) an einer in Richtung Abströmseite (60b) des Mischerkörpers (48b) orientierten Seite wenigstens teilweise radial übergreift, **dadurch gekennzeichnet, dass** der wenigstens eine Gegen-Haltebereich (46b) den zugeordneten Haltebereich (70b) radial innen wenigstens teilweise axial übergreift und mit dem Haltebereich (70b) materialschlüssig verbunden ist.

7. Mischerbaugruppe nach Anspruch 6, **dadurch gekennzeichnet,**
**dass** an dem Trägerelementenkörper (44b) eine Mehrzahl von Gegen-Haltebereichen (46b) sich mit Umfangsabstand zueinander nach radial innen erstreckend vorgesehen ist.

8. Mischerbaugruppe nach Anspruch 6 oder 7, **dadurch gekennzeichnet, dass** wenigstens ein Gegen-Haltebereich einen den zugeordneten Haltebereich (70b) an seiner in Richtung Abströmseite (60b) des Mischerkörpers (48b) orientierten Seite radial übergreifenden ersten Schenkel (94b) und einen an den ersten Schenkel (94b) anschließenden und den zugeordneten Haltebereich (70b) radial innen axial übergreifenden zweiten Schenkel (96b) aufweist.

9. Mischerbaugruppe nach Anspruch 8, **dadurch gekennzeichnet, dass** der erste Schenkel (94b) sich ausgehend von dem ringartigen Trägerelementenkörper (44b) nach radial innen erstreckt, oder dass der erste Schenkel (94b) sich ausgehend von einem dritten Schenkel (102b) nach radial innen erstreckt, wobei der dritte Schenkel (102b) sich in einer einer Erstreckungsrichtung des zweiten Schenkels (96b) entgegengesetzten Erstreckungsrichtung und mit Radialversatz zum zweiten Schenkel (96b) ausgehend vom ersten Schenkel erstreckt,
vorzugsweise wobei der dritte Schenkel (102b) sich ausgehend vom ringartigen Trägerelementenkörper (44b) im Wesentlichen axial in Richtung zum zweiten Schenkel (94b) erstreckt.

10. Mischerbaugruppe nach einem der Ansprüche 6-9, **dadurch gekennzeichnet, dass** an dem ringartigen Trägerelementenkörper (44b) wenigstens ein, vorzugsweise eine Mehrzahl von sich im Wesentlichen nach radial außen erstreckenden Haltevorsprüngen (98b) zur Halterung des Trägerelementenkörpers (44b) an einem rohartigen Abgasführungselement (16b) vorgesehen ist,
oder/und
dass der ringartige Trägerelementenkörper (44b) ringscheibenartig ausgebildet ist, oder dass der ringartige Trägerelementenkörper (44b) rohrartig ausgebildet ist.

11. Mischerbaugruppe nach Anspruch 9 und Anspruch 10, **dadurch gekennzeichnet, dass** wenigstens ein Haltevorsprung (98b) einen ersten Schenkel (94b) radial fortsetzt.

12. Abgasanlage, insbesondere für eine Fahrzeugbrennkraftmaschine, umfassend eine Mischerbaugruppe (26b) nach einem der Ansprüche 6-11.

13. Abgasanlage nach Anspruch 12, sofern auf Anspruch 10 rückbezogen, **dadurch gekennzeichnet, dass** ein rohrartiges Abgasführungselement (16b) in Zuordnung zu dem wenigstens einen Haltevorsprung (98b) eine in dem rohrartigen Abgasführungselement (16b) zu einem axialen Ende offene, den Haltevorsprung (98b) aufnehmende Halteaussparung (100b) aufweist, und dass axial anschließend an den wenigstens einen in einer Halteaussparung (100b) aufgenommenen Haltevorsprung (98b) ein das rohrartige Abgasführungselement (16b) ringartig umgebender flanschartiger Kopplungsabschnitt vorgesehen ist.

14. Abgasanlage nach Anspruch 13, **dadurch gekennzeichnet, dass** der flanschartige Kopplungsabschnitt zusammen mit dem wenigstens einen Haltevorsprung (98b) durch Verschweißen am rohrartigen Abgasführungselement (16b) festgelegt ist.

## Claims

1. Exhaust system, especially for an internal combustion engine of a vehicle, comprising a mixer assembly unit (26a) with a mixer body (48a) with an inflow side (58a) and with an outflow side (60a) and with a plate-like carrier element (24a) with a carrier element body (44a) arranged radially outwards in relation to the mixer body (48a) relative to a mixer longitudinal axis (L) adapted ring-like, wherein the mixer body (48a) comprises a plurality of flow deflection elements (62a) and at least one holding area (70a), wherein the carrier element (24a) comprises, in association with at least one holding area (70a), a counter-holding area (46a), wherein at least one counter-holding area (46a) is connected in substance to a holding area (70a), wherein the mixer assembly unit (26a) is arranged in a junction area (18a) in which two tubular exhaust gas guide elements (14a, 16a) adjoin one another, wherein each of the exhaust gas guide elements (14a, 16a) comprises in the junction area (18a) a flange-like coupling section (20a, 22a) for coupling with the coupling section (20a, 22a) of the respective other exhaust gas guide element (14a, 16a), wherein the carrier element body (44a) of the mixer assembly unit (26a) is arranged between the flange-like coupling sections (20a, 22a) of the exhaust gas guide elements (14a, 16a), **characterized in that**
- at least one counter-holding area (46a) extends over a holding area (70a) on a side oriented in the direction of the outflow side (60a) of the mixer body (48a) at least partially radially and axially radially inwards,
- that the at least one counter-holding area (46a) comprises an essentially U-shaped holding section (50a) with two U-legs (52a, 54a) and a connection area (56a) connecting these, wherein the U-legs (52a, 54a) and the connection area (56a) border a holding area receiving space (72a), which is open essentially in the direction of the inflow side (58a) of the mixer body (48a),
- that one of the U-legs (52a, 54a) is arranged radially outwards in relation to the holding area (70a) arranged in the holding area receiving space (72a), that one of the U-legs (52a, 54a) is arranged radially inwards in relation to the holding area (70a) arranged in the holding area receiving space (72a), and that the holding area (70a) is connected to the U-leg (54a) arranged radially inwards in relation to this holding area, and
- that a coupling element is provided, which encloses the flange-like coupling sections (20a, 22a) in at least some areas radially outwards and extends over them on their axial sides oriented facing away from one another radially inwards.

2. Exhaust system in accordance with claim 1, **characterized in that** the axial sides of the flange-like coupling sections (20a, 22a), which sides are oriented facing away from one another, extend towards one another radially outwards, and that the coupling element has a radially outwards tapering receiving space for the flange-like coupling sections (20a, 22a),
or/and
that a plurality of counter-holding areas (46a) extending radially inwards at circumferentially spaced locations from one another are provided on the carrier element body (44a).

3. Exhaust system in accordance with one of the preceding claims, **characterized in that** an intermediate space (76a) is provided between the holding area (70a) and the U-leg (52a) arranged radially outwards in relation to this.

4. Exhaust system in accordance with one of the preceding claims, **characterized in that** the mixer body (46a) is connected in substance to the carrier element (24a) in the area of at least one and preferably each counter-holding area (46a) extending radially over a holding area (70a),
or/and
that at least one holding area (70a) adjoins a radially outer area of at least one flow deflection element (62a), wherein preferably at least one holding area (70a) comprises a holding web (68a) connecting two flow deflection elements (62a) to one another.

5. Exhaust system in accordance with claim 4, **characterized in that** at least some of the flow deflection elements (62a) and preferably all flow deflection elements (62a) are arranged following one another in the circumferential direction, and that a ring-like connection area (66a), which connects the flow deflection elements (62a) to one another and provides at least one holding web (68a), is provided at a radially outer area of at least some and preferably all said flow deflection elements (62a), wherein preferably the connection area (66a) is made integral with the flow deflection elements (62a) connected by this connection area.

6. Mixer assembly unit, especially for an exhaust system of an internal combustion engine of a vehicle, comprising a mixer body (48b) with an inflow side (58b) and with an outflow side (60b) and a carrier element (24b) with a ring-like carrier element body (44b), which is arranged radially outwards in relation to the mixer body (48b) relative to a mixer longitudinal axis (L), wherein the mixer body (48b) comprises a plurality of flow deflection elements (62b) and at least one holding area (70b), wherein the ring-like carrier element body is arranged at the side of the at least one holding area (70b) oriented towards the outflow side (60b) of the mixer body (48b), wherein the carrier element (24b) comprises in association with at least one holding area (70b) a counter-holding area (46b), wherein at least one counter-holding area (46b) extends at least partially radially over a holding area (70b) on a side oriented in the direction of the outflow side (60b) of the mixer body (48b), **characterized in that** the at least one counter-holding area (46b) extends radially inwards at least partially axially over the associated holding area (70b) and is connected in substance to the holding area (70b).

7. Mixer assembly unit in accordance with claim 6, **characterized in that** a plurality of counter-holding areas (46b) extending radially inwards at circumferentially spaced locations from one another are provided at the carrier element body (44b).

8. Mixer assembly unit in accordance with claim 6 or 7, **characterized in that** at least one counter-holding area has a first leg (94b) extending radially over the associated holding area (70b) on its side oriented in the direction of the outflow side (60b) of the mixer body (48b) and a second leg (96b), which adjoins the first leg (94b) and extends axially radially inwards over the associated holding area (70b).

9. Mixer assembly unit in accordance with claim 8, **characterized in that** the first leg (94b) extends radially inwards starting from the ring-like carrier element body (44b), or that the first leg (94b) extends radially inwards starting from a third leg (102b), wherein the third leg (102b) extends in an extension direction opposite an extension direction of the second leg (96b) and with a radial offset in relation to the second leg (96b) starting from the first leg,
preferably wherein the third leg (102b) extends essentially axially in the direction of the second leg (94b) starting from the ring-like carrier element body (44b).

10. Mixer assembly unit in accordance with one of the claims 6-9, **characterized in that** at least one and preferably a plurality of holding projections (98b) extending essentially radially outwards at the ring-like carrier element body (44b) is/are provided for holding the carrier element body (44b) at a tubular exhaust gas guide element (16b), or/and
**in that** the ring-like carrier element body (44b) has a ring disk-like configuration or that the ring-like carrier element body (44b) has a tubular configuration.

11. Mixer assembly unit in accordance with claim 9 and claim 10, **characterized in that** at least one holding projection (98b) extends a first leg (94b) radially.

12. Exhaust system, especially for an internal combustion engine of a vehicle, comprising a mixer assembly unit (26b) in accordance with one of the claims 6-11.

13. Exhaust system in accordance with claim 12, if related to claim 10, **characterized in that** a tubular exhaust gas guide element (16b) has, in association with the at least one holding projection (98b), a holding recess (100b), which is open in the tubular exhaust gas guide element (16b) toward an axial end and accommodates the holding projection (98b), and that a flange-like coupling section enclosing the tubular exhaust gas guide element (16b) in a ring-like manner is provided axially adjoining the at least one holding projection (98b) accommodated in a holding recess (100b).

14. Exhaust system in accordance with claim 13, **characterized in that** the flange-like coupling section is fixed together with the at least one holding projection (98b) to the tubular exhaust gas guide element (16b) by welding.

## Revendications

1. Système d'échappement, en particulier pour un moteur à combustion interne d'un véhicule, comprenant une unité d'assemblage de mélangeur (26a) avec un corps de mélangeur (48a) avec un côté d'entrée (58a) et un côté de sortie (60a) et avec un élément de support (24a) en forme de plaque avec un corps d'élément de support (44a) disposé radialement vers l'extérieur par rapport au corps de mélangeur (48a) par rapport à un axe longitudinal de mélangeur (L), adapté annulaire, dans lequel le corps de mélangeur (48a) comprend une pluralité d'éléments de déviation d'écoulement (62a) et au moins une zone de maintien (70a), dans lequel l'élément de support (24a) comprend, en association avec au moins une zone de maintien (70a), une zone de contre-maintien (46a), dans lequel au moins une zone de contre-maintien (46a) est reliée en substance à une zone de maintien (70a), dans lequel l'unité d'assemblage de mélangeur (26a) est disposée dans une zone de jonction (18a) de deux éléments de guidage des gaz d'échappement (14a, 16a) de préférence tubulaire, dans lequel chacun des éléments de guidage des gaz d'échappement (14a, 16a) comprend dans la zone de jonction (18a) une section d'accouplement (20a, 22a) en forme de bride pour l'accouplement avec la section d'accouplement (20a, 22a) de l'autre élément de guidage des gaz d'échappement (14a, 16a) respectif, le corps d'élément de support (44a) de l'unité d'assemblage de mélangeur (26a) étant disposé entre les sections d'accouplement (20a, 22a) en forme de bride des éléments de guidage des gaz d'échappement (14a, 16a),
**caractérisé en ce que**
- au moins une zone de contre-maintien (46a) s'étend sur une zone de maintien (70a) sur un côté orienté en direction du côté de sortie (60a) du corps de mélangeur (48a) au moins partiellement radialement et axialement radialement à l'intérieur,
- que ladite au moins une zone de contre-maintien (46a) comprend une partie de maintien (50a) essentiellement en forme de U avec deux branches en U (52a, 54a) et une zone de raccordement (56a) reliant celles-ci, dans laquelle les branches en U (52a, 54a) et la zone de raccordement (56a) délimitent un espace de réception de la zone de maintien (72a) qui est ouvert essentiellement en direction du côté d'entrée (58a) du corps de mélangeur (48a),
- que l'une des branches du U (52a, 54a) est disposée radialement à l'extérieur par rapport à la zone de maintien (70a) disposée dans l'espace de réception de la zone de maintien (72a), que l'une des branches en U (52a, 54a) est disposée radialement à l'intérieur par rapport à la zone de maintien (70a) disposée dans l'espace de réception de la zone de maintien (72a), et que la zone de maintien (70a) est reliée à la branche en U (54a) disposée radialement à l'intérieur par rapport à cette zone de maintien, et
- qu'un élément d'accouplement est prévu, qui entoure les sections d'accouplement en forme de bride (20a, 22a) au moins par endroits radialement à l'extérieur et s'étend sur elles sur leurs côtés axiaux orientés à l'opposé l'un de l'autre radialement vers l'intérieur.

2. Système d'échappement selon la revendication 1, **caractérisé en ce que** les côtés axiaux des sections d'accouplement en forme de bride (20a, 22a), qui sont orientés à l'opposé l'un de l'autre, s'étendent l'un vers l'autre radialement vers l'extérieur, et **en ce que** l'élément d'accouplement présente un espace de réception se rétrécissant radialement vers l'extérieur pour les sections d'accouplement en forme de bride (20a, 22a),
ou/et
qu'une pluralité de zones de contre-maintien (46a) s'étendant radialement vers l'intérieur à des endroits circonférentiellement espacés les uns des autres sont prévues sur le corps d'élément de support (44a).

3. Système d'échappement selon l'une des revendications précédentes, **caractérisé en ce qu'**un espace intermédiaire (76a) est prévu entre la zone de maintien (70a) et la branche en U (52a) disposée radialement à l'extérieur par rapport à celle-ci.

4. Système d'échappement selon l'une des revendications précédentes, **caractérisé en ce que**
le corps de mélangeur (46a) est relié en substance à l'élément de support (24a) dans la zone d'au moins une et de préférence de chaque contre-zone de maintien (46a) s'étendant radialement sur une zone de maintien (70a),
ou/et
qu'au moins une zone de maintien (70a) se raccorde à une zone radialement extérieure d'au moins un élément de déviation d'écoulement (62a), dans laquelle de préférence au moins une zone de maintien (70a) comprend une nervure de maintien (68a) reliant entre eux deux éléments de déviation d'écoulement (62a).

5. Système d'échappement selon la revendication 4, **caractérisé en ce qu'**au moins une partie des éléments de déviation d'écoulement (62a) et de préférence tous les éléments de déviation d'écoulement (62a) sont disposés se succédant dans la direction circonférentielle, et **en ce qu'**une zone de raccordement (66a) de type annulaire, qui relie entre eux les éléments de déviation d'écoulement (62a) et qui prévoit au moins une nervure de maintien (68a), est prévue dans une zone radialement extérieure d'au moins une partie des et de préférence de tous lesdits éléments de déviation d'écoulement (62a), dans lequel de préférence, la zone de raccordement (66a) est formée de manière solidaire avec les éléments de déviation d'écoulement (62a) reliés par cette zone de raccordement.

6. Unité d'assemblage de mélangeur, en particulier pour un système d'échappement d'un moteur à combustion interne d'un véhicule, comprenant un corps de mélangeur (48b) avec un côté entrée (58b) et un côté sortie (60b) et un élément de support (24b) avec un corps d'élément de support (44b) annulaire, qui est disposé radialement à l'extérieur par rapport au corps de mélangeur (48b) par rapport à un axe longitudinal de mélangeur (L), dans lequel le corps de mélangeur (48b) comprend une pluralité d'éléments de déviation d'écoulement (62b) et au moins une zone de maintien (70b), dans lequel le corps d'élément de support annulaire est disposé sur le côté de ladite au moins une zone de maintien (70b) orienté vers le côté d'écoulement (60b) du corps de mélangeur (48b), dans lequel l'élément de support (24b) présente, en association avec au moins une zone de maintien (70b), une zone de contre-maintien (46b), dans lequel au moins une zone de contre-maintien (46b) s'étend au moins partiellement radialement sur une zone de maintien (70b) sur un côté orienté en direction du côté d'écoulement (60b) du corps de mélangeur (48b), **caractérisé en ce que** ladite au moins une zone de contre-maintien (46b) s'étend radialement vers l'intérieur au moins partiellement axialement sur la zone de maintien (70b) associée et est raccordée en substance à la zone de maintien (70b).

7. Unité d'assemblage de mélangeur selon la revendication 6, **caractérisée en ce qu'**une pluralité de zones de contre-maintien (46b) s'étendant radialement vers l'intérieur sont prévues sur le corps d'élément de support (44b) espacés les uns des autres sur la circonférence.

8. Unité d'assemblage de mélangeur selon la revendication 6 ou 7, **caractérisée en ce qu'**au moins une zone de contre-maintien présente une première branche (94b) qui s'étend radialement sur la zone de maintien associée (70b) sur son côté orienté en direction du côté d'écoulement (60b) du corps de mélangeur (48b) et une deuxième branche (96b) qui se raccorde à la première branche (94b) et s'étend axialement radialement vers l'intérieur sur la zone de maintien associée (70b).

9. Unité d'assemblage de mélangeur selon la revendication 8, **caractérisée en ce que** la première branche (94b) s'étend radialement vers l'intérieur à partir du corps d'élément de support (44b) annulaire, ou **en ce que** la première branche (94b) s'étend radialement vers l'intérieur à partir d'une troisième branche (102b), dans laquelle la troisième branche (102b) s'étend dans une direction d'extension opposée à une direction d'extension de la deuxième branche (96b) et avec un décalage radial par rapport à la deuxième branche (96b) à partir de la première branche,
de préférence dans laquelle la troisième branche (102b) s'étend essentiellement axialement en direction de la deuxième branche (94b) à partir du corps d'élément de support annulaire (44b).

10. Unité d'assemblage de mélangeur selon l'une des revendications 6 à 9, **caractérisée en ce qu'**au moins une et de préférence une pluralité de saillies de maintien (98b) s'étendant essentiellement radialement vers l'extérieur sur le corps d'élément de support annulaire (44b) est/sont prévue(s) pour maintenir le corps d'élément de support (44b) sur un élément tubulaire de guidage des gaz d'échappement (16b),
ou/et
**en ce que** le corps d'élément de support annulaire (44b) a une configuration en forme de disque annulaire ou **en ce que** le corps d'élément de support annulaire (44b) a une configuration tubulaire.

11. Unité d'assemblage de mélangeur selon la revendication 9 et la revendication 10, **caractérisée en ce qu'**au moins une saillie de maintien (98b) prolonge une première branche (94b) radialement.

12. Système d'échappement, en particulier pour un moteur à combustion interne d'un véhicule, comprenant une unité d'assemblage de mélangeur (26b) selon l'une des revendications 6 à 11.

13. Système d'échappement selon la revendication 12, si elle se réfère à la revendication 10, **caractérisé en ce qu'**un élément tubulaire de guidage des gaz d'échappement (16b) présente, en association avec ladite au moins une saillie de maintien (98b), un évidement de maintien (100b), qui est ouvert dans l'élément tubulaire de guidage des gaz d'échappement (16b) vers une extrémité axiale et qui reçoit la saillie de maintien (98b), et qu'il est prévu une section d'accouplement en forme de bride qui entoure de manière annulaire l'élément tubulaire de guidage des gaz d'échappement (16b) et qui se raccorde axialement à ladite au moins une saillie de maintien (98b) logée dans un évidement de maintien (100b).

14. Système d'échappement selon la revendication 13, **caractérisé en ce que** la section d'accouplement en forme de bride est fixée par soudage à ladite au moins une saillie de maintien (98b) sur l'élément tubulaire de guidage des gaz d'échappement (16b).
